# EUROPEAN PATENT APPLICATION

(11) **EP 1 986 201 A1**
(43) Date of publication of application: **29.10.2008**
(21) Application number: 07714437.6
(22) Date of filing: 13.02.2007
(51) Int. Cl.: H01G 9/00, H01G 9/26

(54) **CAPACITOR APPARATUS**

(30) Priority: 15.02.2006 JP 2006037987
(71) Applicant: Toyota Jidosha Kabushiki Kaisha, Toyota-shi, Aichi 471-8571 (JP)
(72) Inventor: HIRONAKA, Ryoji, Toyota-shi, Aichi 471-8571 (JP)
(74) Representative: TBK-Patent
(86) International application number: PCT/JP2007/052911
(87) International publication number: WO 2007/094491

(57) **Abstract**

A capacitor apparatus, i.e. a PCU (10), includes a resin mold (24) provided to surround capacitor elements (21) and integrating the plurality of capacitor elements (21), and a case body (31) for containing the resin mold (24). A wave structure is provided at least partially on a wall surface of the case body (31). With such a configuration, a capacitor apparatus capable of suppressing the transmission of the vibration to the vehicle body and improving the cooling efficiency is provided.

## Description

### Technical Field

The present invention generally relates to a capacitor apparatus, and more particularly, to a capacitor apparatus which is mounted in a hybrid vehicle with an internal combustion engine and a motor as driving sources.

### Background Art

With regards to a conventional capacitor apparatus, an electronic unit which is aimed at improving the production efficiency at the time of assembly is disclosed, for example, in Japanese Patent Laying-Open No. 2005-332879 (Patent Document 1). The capacitor unit as an electronic unit disclosed in Patent Document 1 includes a metal case, a resin case accommodated inside the case, and a plurality of capacitor elements arranged in the interior of the resin case. The plurality of capacitor elements are integrated to each other by means of an epoxy resin and the like that fills the interior of the resin case.

A capacitor apparatus stored in a housing, in order to be easily arranged, and is aimed at improving the high frequency characteristics is disclosed in Japanese Patent Laying-Open No. 2005-276946 (Patent Document 2). Moreover, a film capacitor which is aimed at reducing the thermal degradation and improving the lifetime of the capacitor is disclosed in Japanese Patent Laying-Open No. 2002-367857 (Patent Document 3). Patent Documents 2 and 3 disclose a terminal connected to a capacitor element and protruding from a resin member which surrounds the capacitor element.

In addition, a cooling system for a vehicle which is aimed at increasing the cooling efficiency is disclosed in Japanese Patent Laying-Open No. 2005-41401 (Patent Document 4). A cooling device for an inverter which is aimed at increasing the cooling efficiency as well as improving the productivity is disclosed in Japanese Patent Laying-Open No. 2001-245478 (Patent Document 5).

In various power units, a capacitor is commonly used as a smoothing element for removing an alternating-current component from a direct-current voltage. When a capacitor apparatus including an assembly of these capacitors is mounted in a hybrid vehicle, the vibration generated at the capacitor can be transmitted to the vehicle body and possibly make a passenger feel uncomfortable. In addition, the lifetime of the capacitor can be short if the cooling efficiency in the capacitor is low. In view of these issues, there is room for an improvement in the capacitor apparatus disclosed in above-mentioned Patent Documents.

### Disclosure of the Invention

An object of the present invention is to solve the above-mentioned problems, by providing a capacitor apparatus with which the transmission of the vibration to a vehicle body is suppressed and the improvement in the cooling efficiency is achieved.

A capacitor apparatus according to the present invention is a capacitor apparatus mounted in a vehicle. The capacitor apparatus includes a resin mold provided for surrounding capacitor elements and integrating a plurality of the capacitor elements, and a first case body for accommodating the resin mold. A wave structure is provided at least partially on a wall surface of the first case body.

According to a capacitor apparatus configured as set forth above, it is possible to increase the rigidity of the first case body by providing the wave structure, and to suppress the transmission of the vibration generated at the capacitor element to the vehicle body of the hybrid vehicle. Moreover, the surface area of the wall surface increases by providing the wave structure. Therefore, heat generated at the capacitor element and transferred through the resin mold to the first case body is released. Thus, the cooling efficiency in the capacitor element can be improved.

In addition, preferably, the first case body is filled with the resin mold. According to a capacitor apparatus configured as set forth above, the thermal conductivity between the capacitor element and the first case body can be improved.

In addition, preferably, the capacitor apparatus further includes a second case body formed of resin and intervening between the first case body and the resin mold. According to a capacitor apparatus configured as set forth above, the transmission of the vibration generated at the capacitor element to the vehicle body of the hybrid vehicle can be suppressed more effectively, owing to the second case body formed of resin.

In addition, preferably, the first case body is formed of metal. According to a capacitor apparatus configured as set forth above, the heat radiation property of the first case body can be improved.

In addition, preferably, a rib is formed inside the first case body. The resin mold is accommodated in the first case body and in contact with the rib. According to a capacitor apparatus configured as set forth above, the thermal conductivity from the resin mold to the first case body can be improved at the same time as the rigidity of the first case body can be increased.

In addition, preferably, the capacitor apparatus further includes a third case body for defining a space for accommodating an inverter and being fixed to the first case body. The third case body has a cooler. According to a capacitor apparatus configured as set forth above, the heat exchange between the capacitor element and the third case body can be promoted, and the cooling efficiency in the capacitor element can be further improved.

In addition, preferably, the resin mold has a surface exposed to the above-mentioned space. According to a capacitor apparatus configured as set forth above, even in a case where the space in which the inverter is accommodated is heated to a high temperature, the cooling efficiency in the capacitor element can be improved owing to the heat exchange between the capacitor element and the first and third case bodies.

Additionally, the capacitor apparatus further includes a terminal electrically connected to the capacitor elements and protruding from the resin mold. The resin mold has a one end relatively closer to a location from where the terminal protrudes and an other end relatively farther from the location from where the terminal protrudes. Preferably, the first case body is installed in an engine room provided at a front side of a vehicle, and arranged with the one end located at a front side of the vehicle in a longitudinal direction of the vehicle and the other end located at a back side of the vehicle in the longitudinal direction of the vehicle.

In addition, the capacitor apparatus further includes a terminal electrically connected to the capacitor elements and protruding from the resin mold. The vehicle has a vent hole for intaking air when the vehicle is running. Preferably, the first case body is arranged such that the terminal is located on a path of the airflow intaken through the vent hole.

According to a capacitor apparatus configured as set forth above, a temperature of the capacitor element is higher at a location closer to the terminal under the influence of the heat generated by the terminal. Therefore, the capacitor element can be efficiently cooled by positively supplying the air intaken into the engine room or the air intaken through the vent hole, when the vehicle is running, to the terminal.

According to the present invention, as described above, a capacitor apparatus can be provided, with which the cooling efficiency is improved as well as the transmission of the vibration to the vehicle body is suppressed.

### Brief Description of the Drawings

Fig. 1 is a schematic circuit diagram to describe a motor drive system of a hybrid vehicle.
Fig. 2 is a cross sectional view showing a PCU mounted in a hybrid vehicle.
Fig. 3 is a perspective view of a case body for accommodating the capacitor in Fig. 2.
Fig. 4 is a cross sectional view showing a conventional PCU mounted in a hybrid vehicle.
Figs. 5A and 5B are perspective views showing a first modification of the PCU in Fig. 2.
Fig. 6 is a cross sectional view showing a second modification of the PCU in Fig. 2.
Fig. 7 is a perspective view showing a third modification of the PCU in Fig. 2.
Figs. 8A and 8B are plan views of a hybrid vehicle with the PCU in Fig. 2 mounted therein.

### Best Modes for Carrying Out the Invention

Embodiments of the present invention will be described hereafter with reference to the drawings. In the drawings which will be referred to below, the same or corresponding members have the same reference characters allotted.

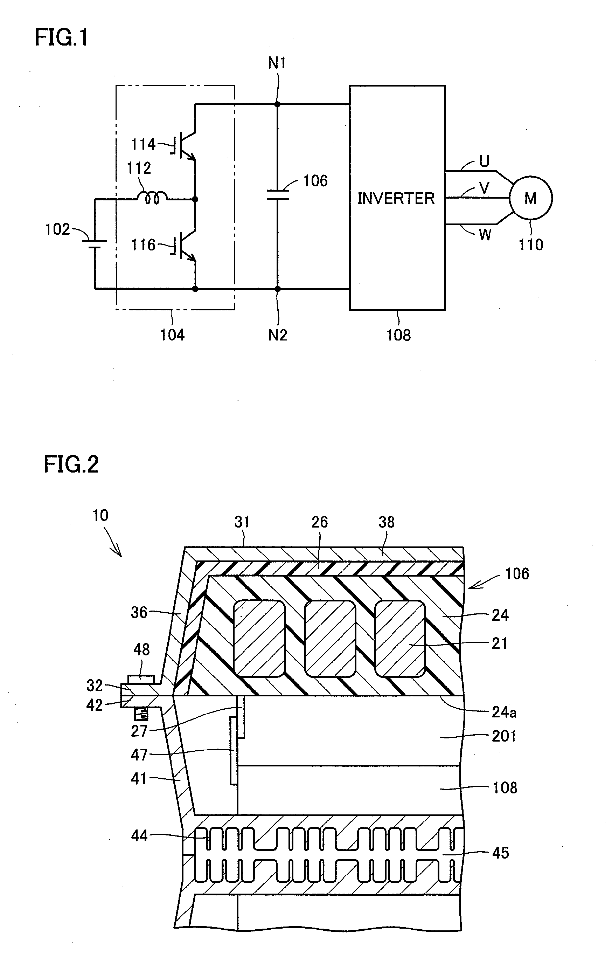

Fig. 1 is a schematic circuit diagram to describe a motor drive system of a hybrid vehicle. This hybrid vehicle uses, as driving sources, an internal combustion engine such as a gasoline engine or a diesel engine, and a motor powered by a chargeable and dischargeable secondary cell (battery).

With reference to Fig. 1, the hybrid vehicle includes a battery 102, a booster circuit 104 for boosting an output voltage of battery 102 and outputting the voltage between nodes N1 and N2, a capacitor 106 connected between output nodes N1 and N2 of booster circuit 104 and stabilizing the output voltage, and an inverter 108 for receiving the output of booster circuit 104, which is stabilized by capacitor 106, as a power source and for driving an AC motor 110.

Although not illustrated, AC motor 110 includes a three-phase coil with U, V and W phases. Although not illustrated, inverter 108 includes a U phase arm, a V phase arm and a W phase arm for controlling current flowing through the coil of AC motor 110. Each of these arms includes two switching elements connected in series between nodes N1 and N2. Inverter 108 is an intelligent power module and further includes an electronic circuit and the like for controlling the actuation of each switching element and the protection from overcurrent.

Booster circuit 104 includes a reactor 112 having a one end connected to a positive electrode of battery 102, an IGBT (insulated gate type bipolar transistor) element 114 connected between an other end of reactor 112 and node N1, and an IGBT element 116 connected between the other end of reactor 112 and node N2. A negative electrode of battery 102 is connected to node N2. A the present invention is also applicable to a single-phase motor with a capacitor which is aimed at smoothing a voltage.

Fig. 2 is a cross sectional view showing a PCU (power control unit) mounted in a hybrid vehicle. With reference to Fig. 2, a PCU 10 includes a case body 31 and a case body 41 for accommodating capacitor 106 and inverter 108. Case body 31 and case body 41 are formed of metal. Case body 31 and case body 41 are formed of aluminum die-casting. Case body 31 and case body 41 may be formed of material other than aluminum, such as iron, magnesium and the like. Case body 31 and case body 41 may be formed of metal differing from each other. PCU 10 is fixed within the engine room of the hybrid vehicle.

Capacitor 106 is accommodated in case body 31. An assembly of a plurality of capacitor elements 21 constitutes capacitor 106. Capacitor element 21 is, for example, a film capacitor having an excellent withstand voltage.

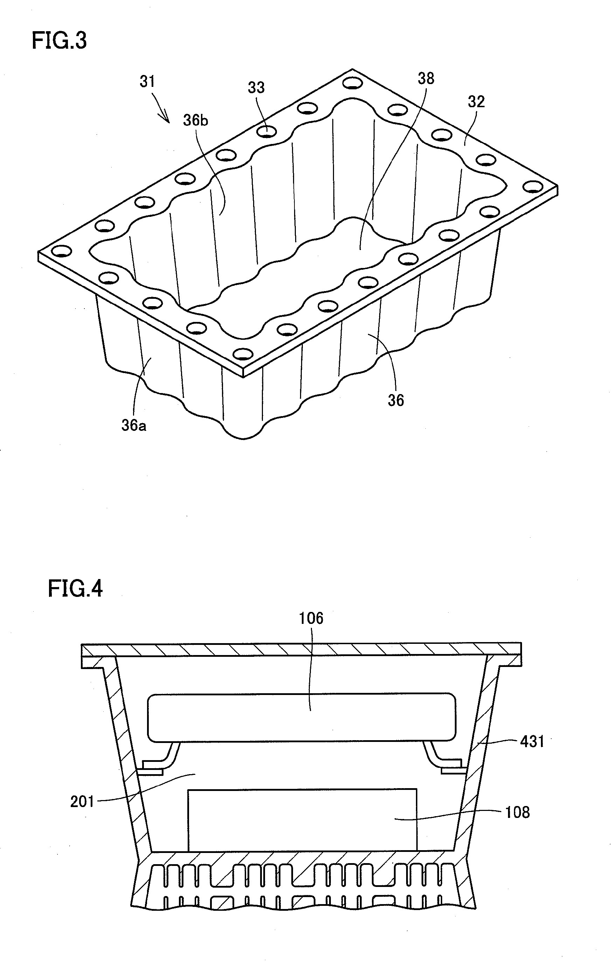

Fig. 3 is a perspective view of a case body for accommodating the capacitor in Fig. 2. With reference to Figs. 2 and 3, case body 31 is formed in a shape of a box. Case body 31 has a bottom portion 38 and a side portion 36 which rises from a circumferential edge of bottom portion 38 and goes around along the circumferential edge of bottom portion 38. Side portion 36 has an internal surface 36b facing the interior space for accommodating capacitor 106 and an external surface 36a at the side opposite to internal surface 36b.

A wave structure is provided at side portion 36. The wave structure is formed such that a projection-depression shape appears repeatedly on the surface of side portion 36 serving as a wall surface of case body 31.

Side portion 36 is formed to extend in a wave-like shape along the circumferential direction of side portion 36. That is, side portion 36 has a cross sectional shape, when severed along a plane which is parallel to bottom portion 38, extending in a wave-like shape in the circumferential direction of side portion 36. By means of the wave structure provided in side portion 36, external surface 36a and internal surface 36b of side portion 36 have a larger area as compared to the case where side portion 36 is formed in a shape of a flat plate. The projection-depression shape appearing on the surface of side portion 36 by means of the wave structure exhibits a function like a rib provided as a reinforcing member. Therefore, the rigidity of case body 31 increases as compared to the case where side portion 36 is formed in a shape of a flat plate.

Note that the wave structure may be shaped to extend in a wave-like shape in a different direction from the circumferential direction of side portion 36. The wave structure may be provided intermittently in the circumferential direction of side portion 36. The wave structure may be provided partially of side portion 36. The wave structure may be provided at bottom portion 38, or provided at both side portion 36 and bottom portion 38. Although the wave structure is provided such that the projection-depression shape appears on both surfaces of side portion 36, as shown in the drawings, the wave structure may be provided such that the projection-depression shape appears on the surface of either one of external surface 36a and internal surface 36b.

The plurality of capacitor elements 21 are integrated by means of a resin mold 24. A resin case 26 intervenes between resin mold 24 and case body 31. Resin mold 24 is accommodated in resin case 26, and that resin case 26 is in turn accommodated in case body 31.

Resin case 26 is formed in a shape of a box extending along the inner wall of case body 31. Resin case 26 and case body 31 are in surface contact. Resin case 26 is fixed to case body 31 with an adhesive. Resin case 26 is filled with resin mold 24. The region between the plurality of capacitor elements 21 and case body 31 is filled with a resin material. No air layer exists between the plurality of capacitor elements 21 and case body 31. The plurality of capacitor elements 21 are provided integrally with one another in case body 31 having the resin material therebetween.

Resin mold 24 is formed of a resin material. Resin mold 24 is formed, for example, of epoxy. Resin mold 24 may be formed of other resin material having an excellent thermal conductivity. Resin case 26 is formed of a different resin material from the resin material forming resin mold 24. Resin case 26 is formed for example of PPS (polyphenylene sulfide).

Case body 41 is fixed to case body 31 with a bolt 48. Inverter 108 is accommodated in case body 41. Capacitor 106 and inverter 108 are accommodated in separate case bodies, case body 31 and case body 41, respectively. The amount of heat generated at inverter 108 is larger than the amount of heat generated at capacitor 106.

Case body 41 is a case body with a cooler and, in the present embodiment, forms a cooling water passage 45 through which cooling water flows. Cooling water passage 45 is formed at a location facing inverter 108. Cooling water passage 45 is formed on the opposite side of capacitor 106 having inverter 108 therebetween. Case body 41 has a fin 44 protruding towards cooling water passage 45 for promoting heat exchange between cooling water and case body 41. Fins 44 are formed integrally in case body 41.

Case body 41 defines a space 201 for accommodating inverter 108. Resin mold 24 has a surface 24a facing space 201. Capacitor 106 is provided with a terminal 27 electrically connected to capacitor element 21 and protruding from surface 24a towards space 201. Terminal 27 is connected to a terminal 47 extending from inverter 108.

Case body 31 has a flange 32. Flange 32 extends in a flange-like shape from a side end of side portion 36, located in an opposite side of bottom portion 38. Flange 32 extends continuously in the circumferential direction of side portion 36. A plurality of bolt insertion holes 33 in which bolts 48 are inserted are formed in flange 32. Case body 41 has a flange 42 facing flange 32 and being fastened to flange 32 with bolt 48. Flange 32 and flange 42 are in surface contact such that the contact area of case body 31 and case body 41 is increased.

Fig. 4 is a cross sectional view showing a conventional PCU mounted in a hybrid vehicle. With reference to Fig. 4, in the conventional PCU, capacitor 106 and inverter 108 are accommodated in space 201 within a single case body 431. Capacitor 106 is arranged to be surrounded by space 201. Capacitor 106 is arranged at a location apart from case body 431.

With such a configuration, in the conventional PCU, a temperature of capacitor 106 (T1) greatly depends on an atmosphere temperature of space 201 (T2) which is increased to a high temperature by heat generation in inverter 108. Therefore, capacitor 106 cannot be cooled efficiently.

With reference to Figs. 2 and 3, on the other hand, in PCU 10, capacitor elements 21 are provided integrally in case body 31 having resin mold 24 and resin case 26 therebetween. Therefore, heat generated at capacitor element 21 is more positively conducted to case body 31 1 and is emitted from case body 31. As a result, in the present embodiment, the temperature of capacitor 106 (T1) depends greater on a temperature of case body 31 (T3) than on the atmosphere temperature of space 201 (T2).

Moreover, case body 31 is fixed to case body 41 having cooling water passage 45. Therefore, heat transmitted from capacitor element 21 to case body 31 is further conducted to case body 41, and is emitted to the cooling water flowing through cooling water passage 45.

The temperature of case body 31 (T3) is lower than the atmosphere temperature of space 201 (T2). A temperature of the cooling water flowing through cooling water passage 45 (T4) is lower than the atmosphere temperature of space 201 (T2). The temperature of the cooling water flowing through cooling water passage 45 (T4) is lower than the temperature of case body 31 (T3). An example of each temperature is: the temperature of capacitor 106 (T1) is 80°C, the atmosphere temperature of space 201 (T2) is 100°C, the temperature of case body 31 (T3) is 70°C, and the temperature of the cooling water (T4) is 65°C.

PCU 10 as a capacitor apparatus in the present embodiment of the present invention includes resin mold 24 provided for surrounding capacitor elements 21 and integrating a plurality of capacitor elements 21, and case body 31 as the first case body for accommodating resin mold 24. The wave structure is provided in side portion 36 as at least a part of the wall surface of case body 31.

According to PCU 10 of the present embodiment of the present invention configured as set forth above, the rigidity of case body 31 can be increased by means of the wave structure provided in case body 31. Thus, the transmission of the vibration generated at capacitor element 21 to the vehicle body through case body 31 is suppressed and NV (noise and vibration) performance of the hybrid vehicle can be improved. In particular, in the present embodiment, resin case 26 is provided for intervening between resin mold 24 and case body 31. Therefore, when the hardness of the resin material forming resin case 26 is lower than the hardness of the resin material forming resin mold 24, the vibration from resin mold 24 towards case body 31 attenuates more greatly within resin case 26. Thus, the transmission of the vibration to the vehicle body can be suppressed more effectively.

Moreover, by means of the wave structure provided in case body 31, the heat radiation from case body 31 can be promoted, and the cooling efficiency of capacitor 106 can be improved. Thus, the lifetime of capacitor element 21 can be prolonged. In particular, in a case where capacitor 106 is downsized in order to secure a mounting space, the amount of heat generated at capacitor 106 becomes larger. In addition, in a case where the PCU is downsized, the atmosphere temperature of space 201 (T2) increases, resulting that capacitor 106 tends to be more susceptible to heat generated by other components. Therefore, it is more effective to utilize the present invention in which the improved cooling efficiency of capacitor 106 is achieved.

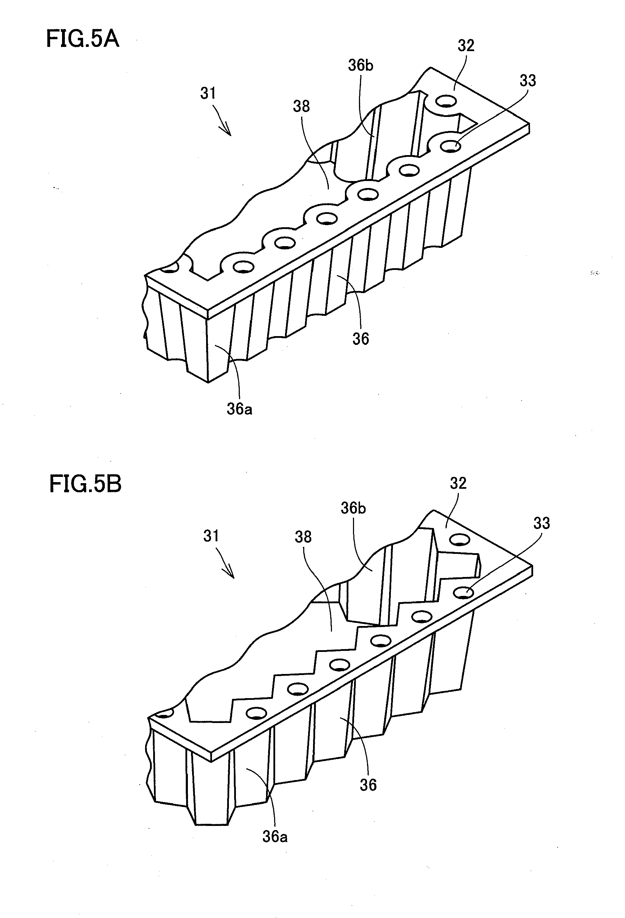

Figs. 5A and 5B are perspective views showing a first modification of the PCU in Fig. 2. In the drawings, case body 31 forming PCU 10 is shown. With reference to Fig. 5A, in the present modification, the wave structure is provided in case body 31, in which side portion 36 is depressed along an extension of bolt insertion hole 33 and side portion 36 is projected between mutually adjoining bolt insertion holes 33, when viewed from outside of case body 31. With such a configuration, in addition to the above-mentioned effect, an effect of avoiding interference between bolt 48 inserted in bolt insertion hole 33 and side portion 36 can be achieved. With reference to Fig. 5B, in the present modification, side portion 36 is formed to extend in a zigzag manner along the circumferential direction of side portion 36.

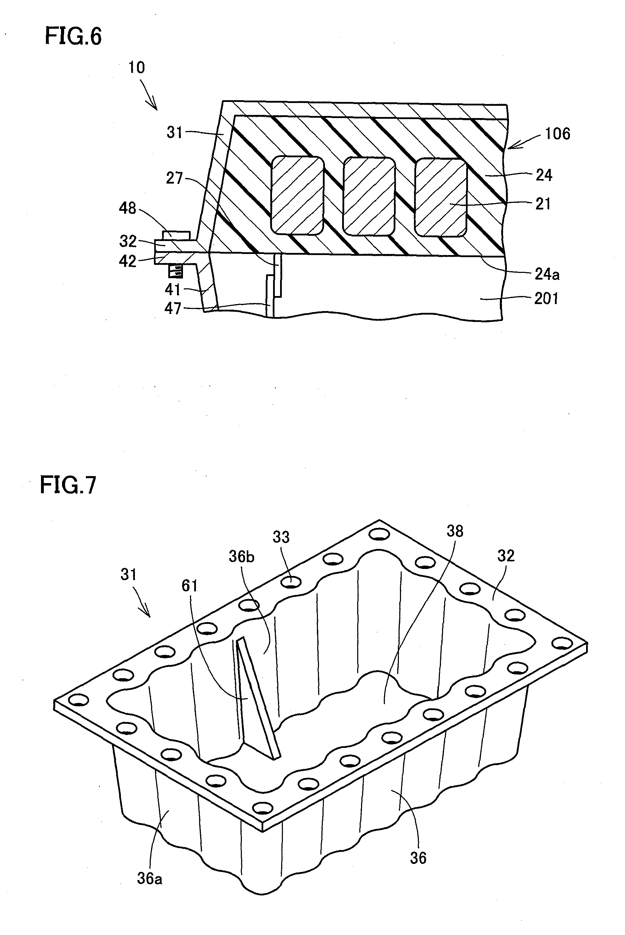

Fig. 6 is a cross sectional view showing a second modification of the PCU in Fig. 2. In the drawing, a part of the cross section shown in Fig. 2 is shown. With reference to Fig. 6, resin case 26 in Fig. 2 is not provided in the present modification. That is, case body 31 is directly filled with resin mold 24. In this case, as compared with PCU 10 in which resin case 26 is provided, the cooling efficiency of capacitor 106 can be improved more effectively while the transmission of the vibration is less suppressed.

Fig. 7 is a perspective view showing a third modification of the PCU in Fig. 2. In the drawing, case body 31 forming PCU 10 is shown. With reference to Fig. 7, in the present modification, a rib 61 is provided on an inner wall of case body 31. Rib 61 is formed of metal. Preferably, rib 61 is formed integrally with case body 31. With such a configuration, the thermal conductivity from resin case 26 to case body 31 can improved at the same time as the rigidity of case body 31 can be further increased.

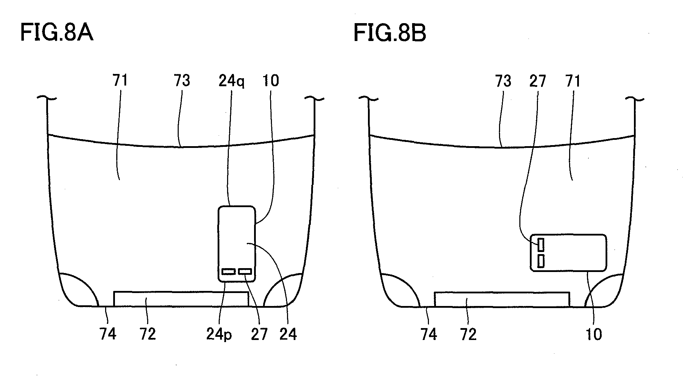

Figs. 8A and 8B are plan views of the a hybrid vehicle having the PCU in Fig. 2 mounted therein. With reference to Figs. 8A and 8B, an engine room 71 is formed in the front of the hybrid vehicle. Engine room 71 is formed between a front bumper 74 and a dashboard panel 73. A front grill 72 is provided in front of engine room 71 as a vent hole for intaking outside air to engine room 71.

With reference to Fig. 8A, in the present modification, resin mold 24 has a one end 24p which is relatively closer to a location from where terminal 27 protrudes and an other end 24q which is relatively farther from the location. PCU 10 is arranged in engine room 71 such that one end 24p is located at the front side of the vehicle and other end 24q is located at the back side of the vehicle. With reference to Fig. 8B, in the present modification, PCU 10 is arranged such that terminal 27 is positioned on the path of the airflow intaken from front grill 72 when the vehicle is running. PCU 10 is arranged such that front grill 72 and terminal 27 overlap in the longitudinal direction of the vehicle.

Influenced by heat generation in terminal 27, the temperature of capacitor element 21 disposed in proximity to terminal 27 is the highest among the temperatures of the plurality of capacitor elements 21. Since the lifetime of capacitor 106 is determined based on the temperature of this element, this element needs to be cooled more positively. In the present modification, the wind caused by the running vehicle intaken into engine room 71 when the vehicle is running is blown onto case body 31 at the location in proximity of terminal 27. Therefore, by utilizing the wind caused by the running vehicle, capacitor element 21 disposed in proximity to terminal 27 can be cooled positively. In particular, when the vehicle is running at a high speed and the temperature of terminal 27 is high, the cooling utilizing the wind caused by the running vehicle is also performed actively, such that the cooling in accordance with the temperature of capacitor element 21 can be conducted.

The present invention is also applicable to a capacitor mounted in an electric vehicle or a fuel cell hybrid vehicle ( FCHV ) using a fuel cell and a motor powered by a secondary battery as driving sources.

The embodiments disclosed herein must be considered illustrative in all points and not restrictive. The scope of the present invention is shown not by the aforementioned description but by the scope of claim, and it is intended that all modifications within the meaning and range equivalent to the scope of claim are included.

### Industrial Applicability

The present invention is primarily applied to a capacitor mounted in a hybrid vehicle using an internal combustion engine and a motor powered by a secondary battery as driving sources, an electric vehicle, or a fuel cell hybrid vehicle using a fuel cell and a motor powered by a secondary battery as driving sources.

## Claims

1. A capacitor apparatus mounted in a vehicle comprising:
a resin mold (24) provided for surrounding capacitor elements (21) and integrating a plurality of said capacitor elements (21); and
a first case body (31) for accommodating said resin mold (24), a wave structure being provided at least partially on a wall surface of said first case body (31).

2. The capacitor apparatus according to claim 1, wherein said first case body (31) is filled with said resin mold (24).

3. The capacitor apparatus according to claim 2, further comprising:
a second case body (26) formed of resin and intervening between said first case body (31) and said resin mold (24).

4. The capacitor apparatus according to claim 1, wherein said first case body (31) is formed of metal.

5. The capacitor apparatus according to claim 1, wherein a rib (61) is formed inside said first case body (31), said resin mold (24) being accommodated in said first case body (31) and in contact with said rib (61).

6. The capacitor apparatus according to claim 1, further comprising:
a third case body (41) for defining a space (201) for accommodating an inverter (108) and being fixed to said first case body (31), said third case body (41) having a cooler (45).

7. The capacitor apparatus according to claim 6, wherein said resin mold (24) has a surface (24a) exposed to said space (201).

8. The capacitor apparatus according to claim 1, further comprising:
a terminal (27) electrically connected to said capacitor elements (21) and protruding from said resin mold (24), wherein
said resin mold (24) has a one end (24p) relatively closer to a location from where said terminal (27) protrudes and an other end (24q) relatively farther from the location from where said terminal protrudes,
said first case body (31) being installed in an engine room (71) provided at a front side of a vehicle and arranged with said one end (24p) located at a front side of the vehicle in a longitudinal direction of the vehicle and said other end (24q) located at a back side of the vehicle in the longitudinal direction of the vehicle.

9. The capacitor apparatus according to claim 1, further comprising:
a terminal (27) electrically connected to said capacitor elements (21) and protruding from said resin mold (24), wherein
said vehicle has a vent hole (72) for intaking air when the vehicle is running,
said first case body (31) being arranged such that said terminal (27) is located on a path of the airflow intaken through said vent hole (72).
